# EUROPEAN PATENT SPECIFICATION

(11) **EP 0 224 236 B1**
(45) Date of publication and mention of the grant of the patent: **09.02.1994**
(21) Application number: 86116303.8
(22) Date of filing: 25.11.1986
(51) Int. Cl.: C08L 73/00, C08L 81/06, C08L 71/00, C08K 3/00, C08K 7/02

(54) **Thermoplastic resin composition with improved chemical resistance**
Thermoplastische Harzzusammensetzung mit verbesserter chemischer Beständigkeit
Composition de résine thermoplastique ayant une résistance chimique modifiée

(30) Priority: 29.11.1985 JP 270431/85
(43) Date of publication of application: 03.06.1987
(73) Proprietor: SUMITOMO CHEMICAL COMPANY, LIMITED, Chuo-ku Osaka 541 (JP)
(72) Inventor: Saito, Teruo, Kusatsu-shi (JP); Suzuki, Yasurou, Ichihara-shi (JP); Asai, Kuniaki, Tondabayashi-shi (JP)
(74) Representative: VOSSIUS & PARTNER

(56) References cited:
- EP-A- 176 988
- Patent Abstracts of Japan, unexamined applications, C field, vol. 9, no. 71, March 30, 1985, The Patent Office Japanese Government, page 20 C 272

## Description

This invention relates to a resin composition with increased chemical resistance which comprises polyetherketone and aromatic polyethersulfone.

Compositions comprising a polyetherketone and an aromatic polysulfone are already known from Japanese Patent Application Kokai (Laid-Open) Nos. 34,512/83 and 202,256/84 and other literature. They unite various characteristics superior in heat distortion temperature, modulus at high temperature, resistance to creep at high temperature as well as resistance to stress cracking.

However, such compositions become poor in chemical resistance and hot-water resistance, which are the strong points of polyetherketone, as the proportion of aromatic polysulfone compounded therein increases.

On the other hand, requirements for resin materials have been enhanced and diversified in recent years particularly in such advanced industries as the electric, electronic, automobile, and office automation instrument industry, so that there is eagerly awaited a resin composition comprising polyetherketone and polysulfone which composition has improved chemical resistance while keeping the merits of a resin composition comprising polyetherketone and polysulfone.

The object of this invention is to provide a resin composition with improved chemical resistance and stable injection-moldability which comprises a polyetherketone and an aromatic polysulfone.

This object could surprisingly be achieved by a resin composition comprising
(1) 100 parts by weight of a blend of
   20 to 95% by weight of a polyetherketone consisting of the repeating unit (A), 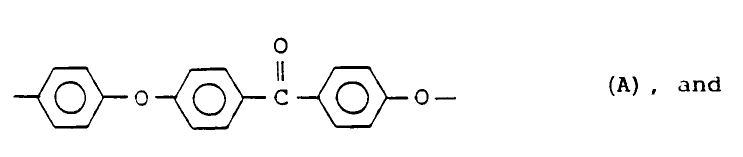 80 to 5% by weight of an aromatic polysulfone consisting of the repeating unit (B), 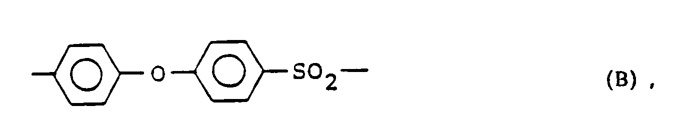 the melt viscosity of said polyetherketone at 400°C satisfying the following inequality,

   $\text{500 ≦ y ≦ 70 x,}$

   wherein x is the percentage by weight of said polyetherketone relative to the total amount of said polyetherketone and aromatic polysulfone, and the unit for y is poise (0.1 Pa·s), and
(2) 10 to 200 parts by weight of one or more fillers having an average fiber length or an average diameter of 5 µm or more.

The resin composition used in this invention which comprises 20 to 95% by weight of polyetherketone and 80 to 5% by weight of an aromatic polyethersulfone will be described in detail below.

The melt viscosity of resin in this invention is defined as the apparent melt viscosity which is determined by filling the resin in a cylinder with a cross-sectional area of 1 cm², allowing it to stand at 400°C for 5 minutes, and extruding it through a nozzle of 1 mm in diameter and 10 mm in length under an applied pressure of 490 N (50 kgf) (that is to say, extruding it at a shear stress of 0.123 N/mm² (1.25 kgf/cm²)).

The polyetherketone used in this invention is a polymer having repeating units of the formula 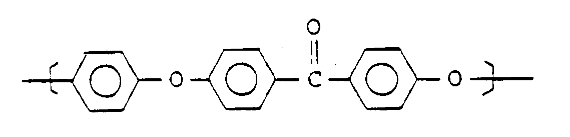
for instance VICTREX PEEK, a trade name, mfd. by I.C.I. Ltd.

The polyetherketone used in this invention has a melt viscosity y (expressed in poise (0.1 Pa·s)) in the range satisfying the inequation

$\text{500 ≦ y ≦ 70 x (1)}$

When the melt viscosity of polyetherketone at 400°C is less than 10 Pa·s (100 poises), the resulting composition has too high fluidity owing to low molecular weight and resultantly, in injection molding, which is the most common method of molding, causes unstable molding and insufficient retention of applied secondary pressure, which tends to give molded articles with sink and poor dimensional accuracy.

When the melt viscosity y (expressed in poise) of polyetherketone at 400°C is in the range defined by the inequation

$\text{y > 70 x + 1000}$

an unsatisfactory effect is obtained in improving the solvent resistance by incorporation of fillers.

The aromatic polyethersulfone used in this invention contains the repeating unit of the following structure 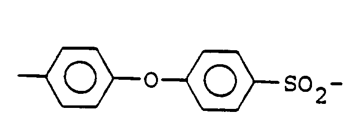
for instance VICTREX PES, a trade name, mfd. by I.C.I. LTD.

When the aromatic polyethersulfone has a melt viscosity of 100 Pa·s (1000 poises) or more as determined at 400°C and at a shear stress of 0.123 N/mm² (1.25 kgf/cm²), the resulting composition is further improved in physical properties including strength and toughness and also in chemical resistance.

When the melt viscosity is 300 Pa·s (3000 poises) or more, the resulting composition shows a still more marked improvement in chemical resistance.

When the proportion of the aromatic polysulfone is less than 5% by weight and that of the polyetherketone is more than 95% by weight, the modulus of elasticity of the resulting composition is greatly decreased at temperatures equal to or higher than the glass transition temperature of the polyetherketone. Further, the composition has a poor creep resistance at temperatures equal to or higher than the glass transition temperature of the polyetherketone similarly to polyetherketone alone, and thus the defect of polyetherketone is not obviated.

On the other hand, when the proportion of the polyetherketone is less than 20% by weight and that of the aromatic polysulfone exceeds 80% by weight, the resulting composition shows markedly decreased resistance to chemicals and to hot water irrespective of the molecular weight of the polyetherketone used.

Compounding of 30 to 90% by weight of polyetherketone with 70 to 10% by weight of aromatic polysulfone is preferable because a higher effect is obtained in improving the above-mentioned properties. Even more preferable is to compound 40 to 90% by weight of polyetherketone with 60 to 10% by weight of aromatic polysulfone.

Nextly, the fillers used in this invention will be described in detail.

The fillers to be used in this invention have an average fiber length or an average diameter of 5 µm or more. Examples thereof include inorganic fibers, organic fibers and inorganic needle-shaped materials having an average fiber length of 5 µm or more, and tabular, lump or globular fillers having an average diameter of 5 µm or more.

The term "average fiber length" or "average diameter" used herein refers to a weight average value, and indicates the weight average value of the longest diameter for tabular or lump materials.

Examples of suitable fibrous fillers include glass fibers, carbon fibers, boron fibers, alumina fibers, and aramid fibers; those of inorganic needle-shaped materials include calcium metasilicate and potassium titanate whiskers. Examples of suitable tabular, lump or globular fillers include mica, glass flakes and talc.

At least one member selected from these fillers is compounded in the present composition.

Inorganic or organic fibers or needle-shaped materials having an average fiber length of less than 5 µm, and tabular, lump or globular fillers having an average diameter of less than 5 µm do not exhibit a satisfactory effect in improving the chemical resistance of the abovementioned composition.

Fillers having an average fiber length or an average diameter of 10 µm or more are preferable because they give a large effect in improving the chemical resistance of the composition.

The amount of fillers to be compounded is 10 to 200 parts by weight relative to 100 parts by weight of the resin composition comprising 20 to 95% by weight of the polyetherketone and 80 to 5% by weight of the aromatic polysulfone. More preferably, it is from 15 to 200 parts by weight.

When the amount of fillers compounded is less than 10 parts by weight of the resin composition, the chemical resistance of the composition is scarcely improved. When the compounded amount exceeds 200 parts by weight, the resulting composition has a markedly decreased melt fluidity and exhibits a poor behavior in granulation and injection molding.

The compounding method used to obtain the composition in this invention is not specifically restricted.

The composition may be obtained either by supplying each of the polyetherketone, the aromatic polysulfone and fillers separately to a melt-blender or by preliminarily mixing these materials beforehand by use of a mortar, Henschel mixer, ball mill or ribbon blender and then supplying the resulting mixture to a melt blender.

Further, the powder, granule or pellet of the polyetherketone, the powder, granule or pellet of the aromatic polysulfone, and fillers may be dry-blended and then directly supplied to injection machine.

Further, the present composition may be incorporated with one or more conventional additives including antioxidants, thermal stabilizers, ultraviolet absorbers, release agents, coloring agents and nucleating agents within a range not detrimental to the object of this invention.

The composition of this invention has, in addition to superior in modulus at high-temperature, creep resistance at high-temperature and resistance to stress cracking which are characteristic of a composition comprising polyetherketone and aromatic polysulfone, an excellent solvent resistance by virtue of the addition of specified fillers.

The cause of such improved properties can be estimated as follows.

The composition comprising the aromatic polysulfone and the polyetherketone is a composition of an incompatible type and may assume, depending on the content and the melt viscosity of the polyetherketone, a so-called sea-island structure wherein polyetherketone forms a continuous phase and aromatic polysulfone forms a dispersed phase of several to 10 µm in diameter, a structure wherein polyetherketone forms itself into fibers and aromatic polysulfone forms a continuous phase, or a structure wherein aromatic polysulfone forms a continuous phase and polyetherketone forms an island phase.

When the continuous phase is formed of the aromatic polysulfone, which is far inferior to the polyetherketone in point of chemical resistance, the resulting composition shows a greatly decreased chemical resistance.

By compounding a filler having an average fiber length or an average diameter of 5 µ or more into a composition comprising polyetherketone and aromatic polysulfone having the range of proportions satisfying the inequation (1), it is possible to prevent polyetherketone from forming fibers and aromatic polysulfone from forming a continuous phase in the composition, and further the fillers divide the aromatic polysulfone phase into pieces, whereby the diffusion of solvent into the aromatic polysulfone is suppressed and thus the solvent resistance of the composition is markedly improved.

Fillers which have an average fiber length or an average diameter of less than 5 µm do not give satisfactory improving effect mentioned above.

This invention will be described in detail below with reference to Examples. However, they are merely for the sake of illustration and the invention is not limited thereto.

### Examples 1 to 20, and Comparative Examples 1 to 27

The polyetherketones used were those which have a repeating unit of the formula 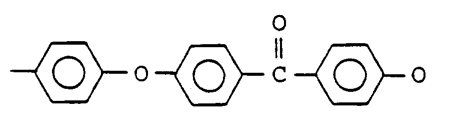
and a melt viscosity at 400°C of 100, 350 and 560 Pa·s (1,000, 3,500 and 5,600 poises) respectively (an intrinsic viscosity of 0.9, 1.10, and 1.31 respectively as determined as a solution in concentrated sulfuric acid at 25°C).

The aromatic polyethersulfone used was one which has a repeating unit of the formula 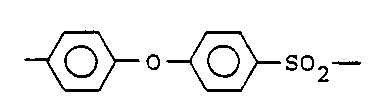
(melt viscosity of 450 Pa·s (4,500 poises) at 400°C)
The fillers used were a glass fiber (CSO₃ MAPX-1, a trade name, mfd. by Asahi Fiber Glass Co., Ltd.), a carbon fiber (Magnamite 1810, a trade name, mfd. by Hercules Inc.), a potassium titanate fiber (Tismo D, a trade name, mfd. by Otsuka Chemical Co., Ltd.), calcium metasilicate (NYAD-G, a trade name, mfd. by NYCO Co.), mica (Suzorite Mica 200S, a trade name, mfd. by Kuraray Co., Ltd.), talc (S Talc, a trade name, mfd. by Shokosan Kogyosho), talc (5000S, a trade name, mfd. by Hayashi Kasei Co., Ltd.), titanium oxide (CR-60, a trade name, mfd. by Ishihara Sangyo Kaisha, Ltd.) and alumina (mfd. by Sumitomo Aluminum Smelting Co., Ltd.).

These ingredients were compounded in proportions shown in Tables 1, 2 and 3 and melt-blended at 360°C in a twin screw extruder (PCM-30, a trade name, mfd. by Ikegai Iron Works, Ltd.) and the extruded strands were cooled with water and then cut into pellets.

The pellets obtained above were molded into tensile test specimens by use of an injection molding machine (Sumitomo Nestal 47/28 Injection-molding machine; cylinder temperature: 380°C, injection pressure: 147,1 MPa (1500 kg/cm²), injection speed: medium speed, injection time: 10 sec, cooling time: 20 sec, mold temperature: 150°C), which were subjected to the determination of tensile strength according to ASTM D-638.

Solvent resistance was tested by immersing the above-mentioned tensile test specimen in N-methyl-2-pyrrolidone, which is a good solvent for the aromatic polyethersulfone, for 24 hours, measuring the change in weight, then immersing the specimen again, and after total immersion time of 168 hours, measuring the change in weight and the tensile strength.

The weight average dimension of the fillers was determined by observation under a scanning-type electron microscope of a residue obtained after burning a molded article in a crucible or a residue obtained after dissolving the article in sulfuric acid.

The results thus obtained are shown in Table 1, 2 and 3.

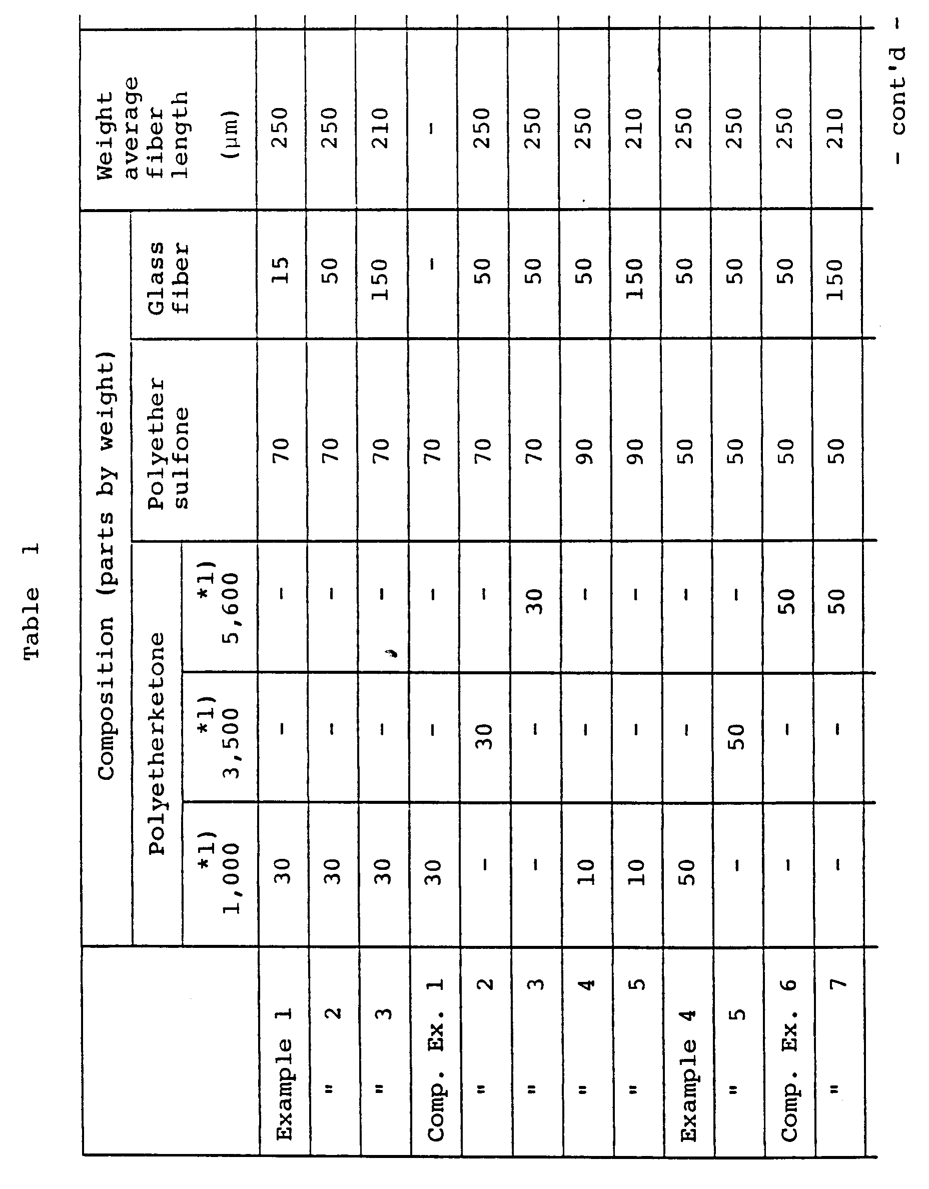

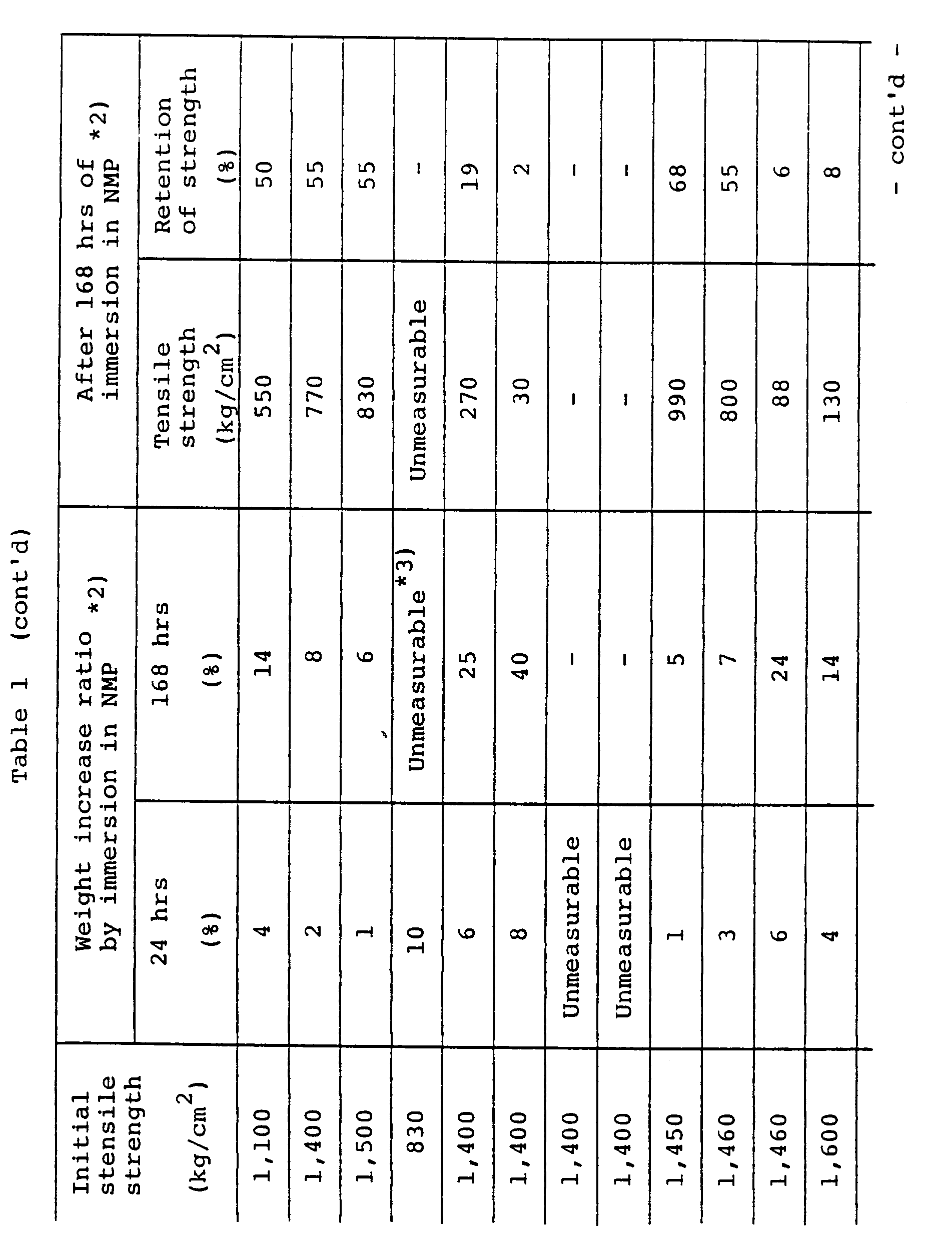

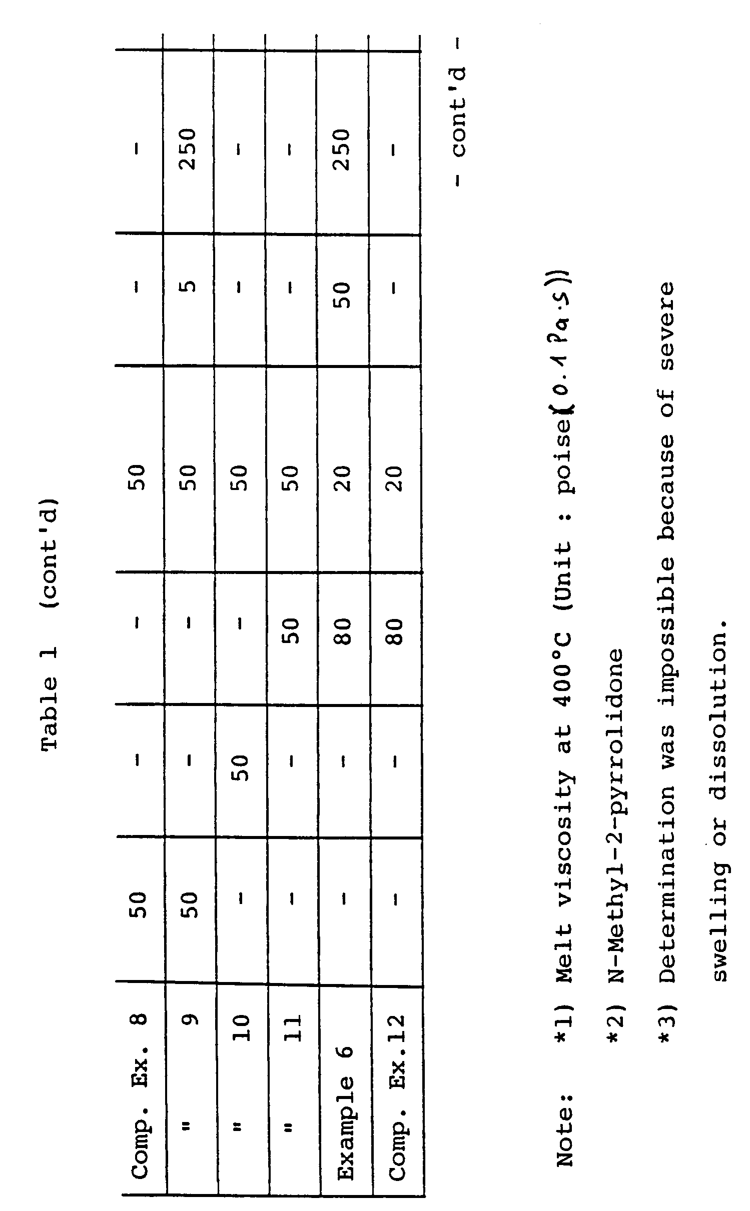

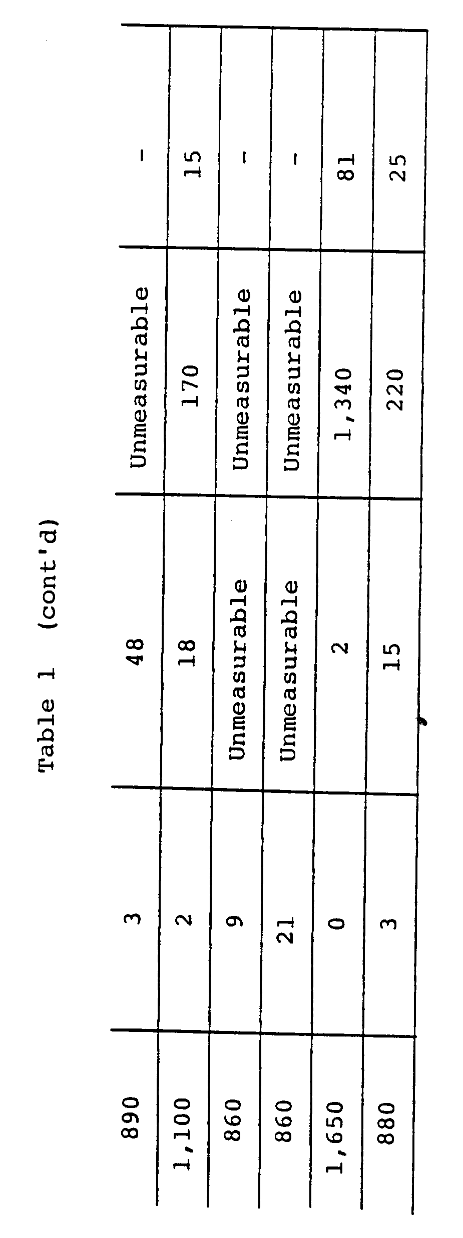

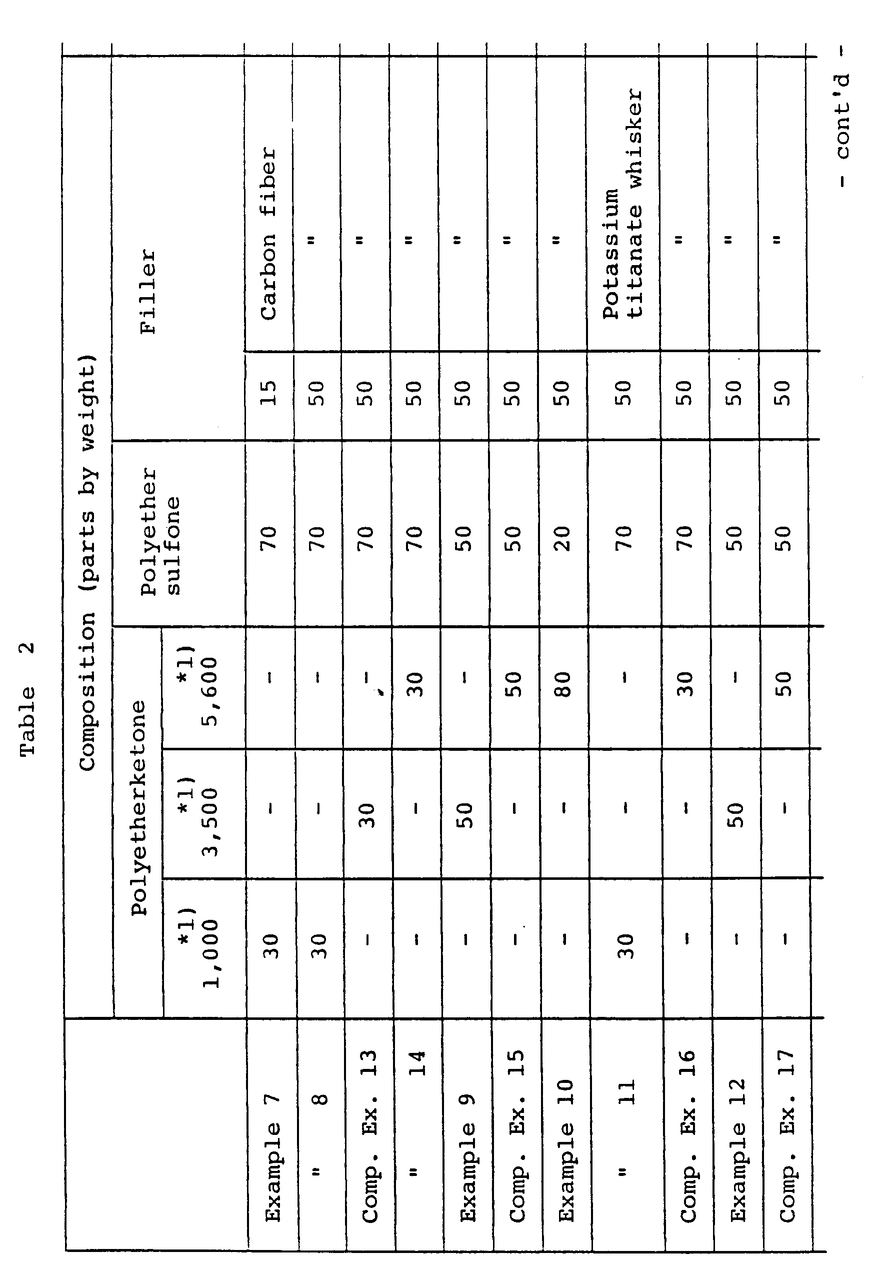

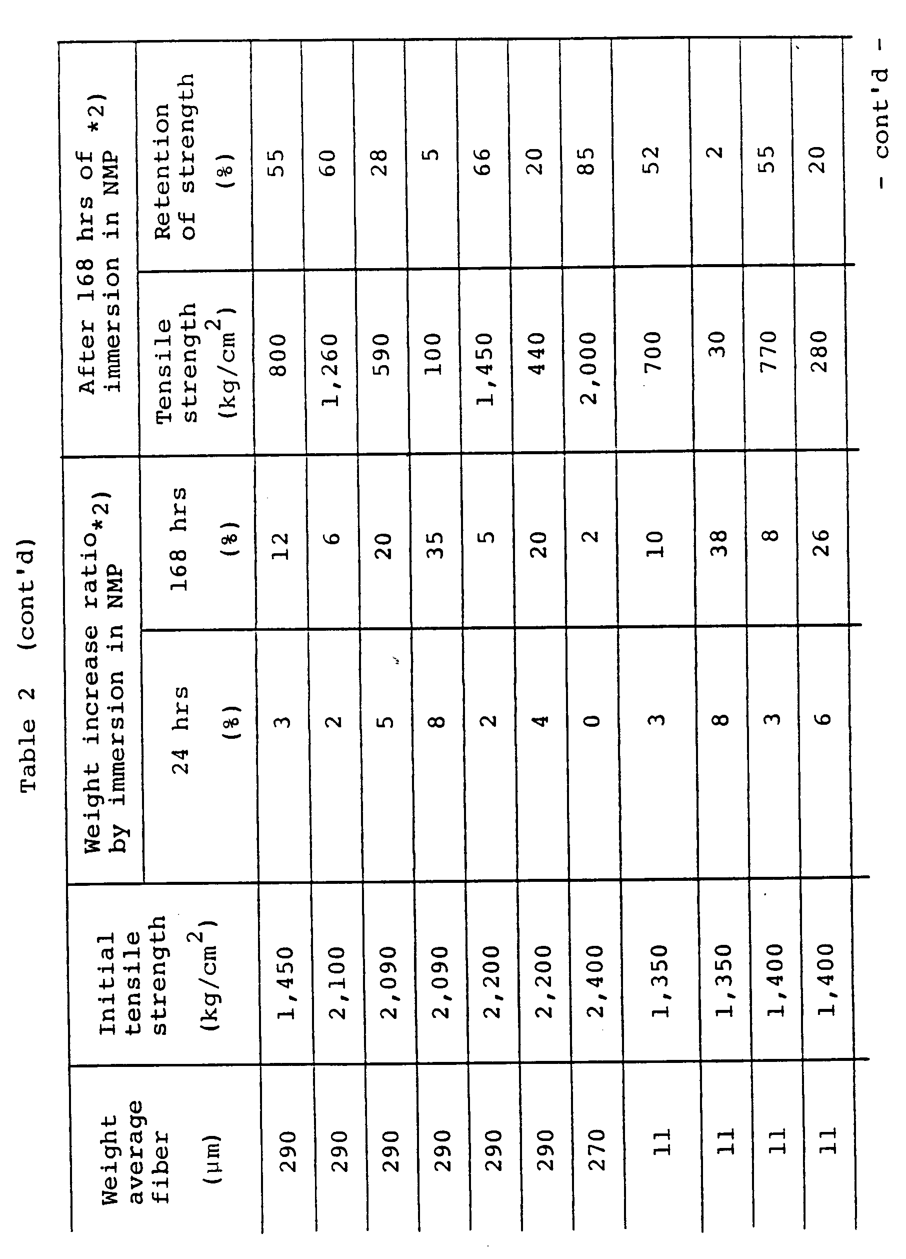

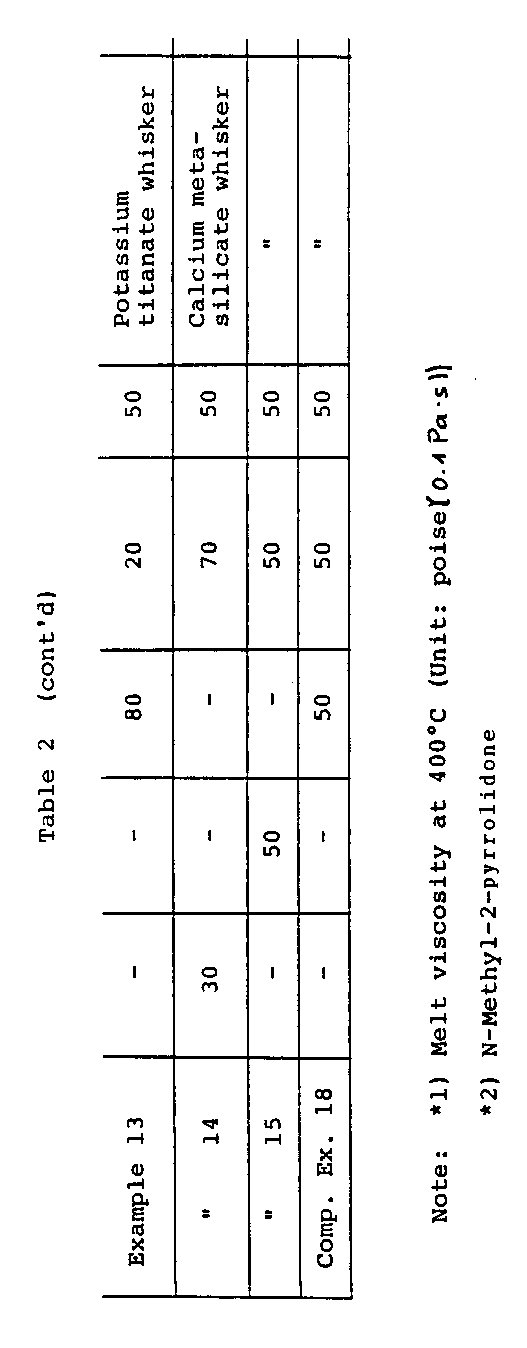

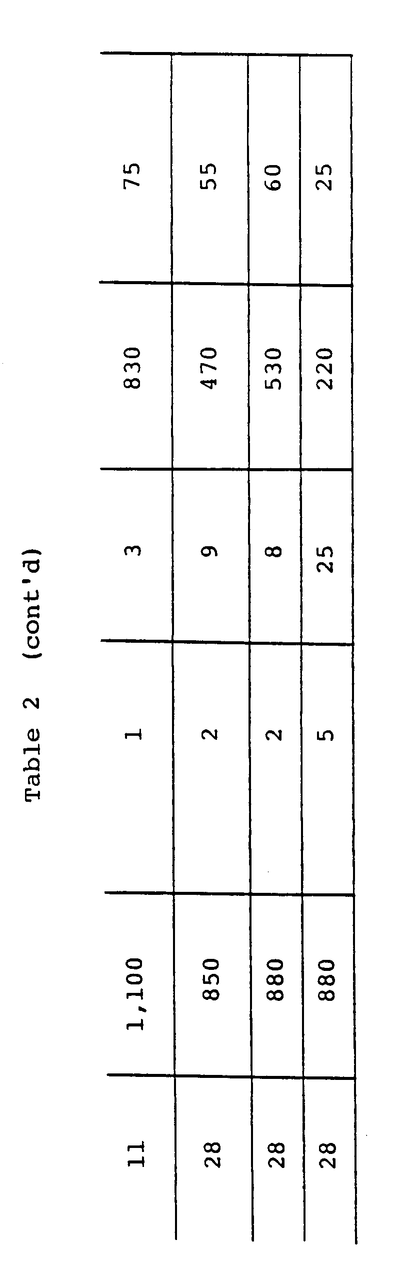

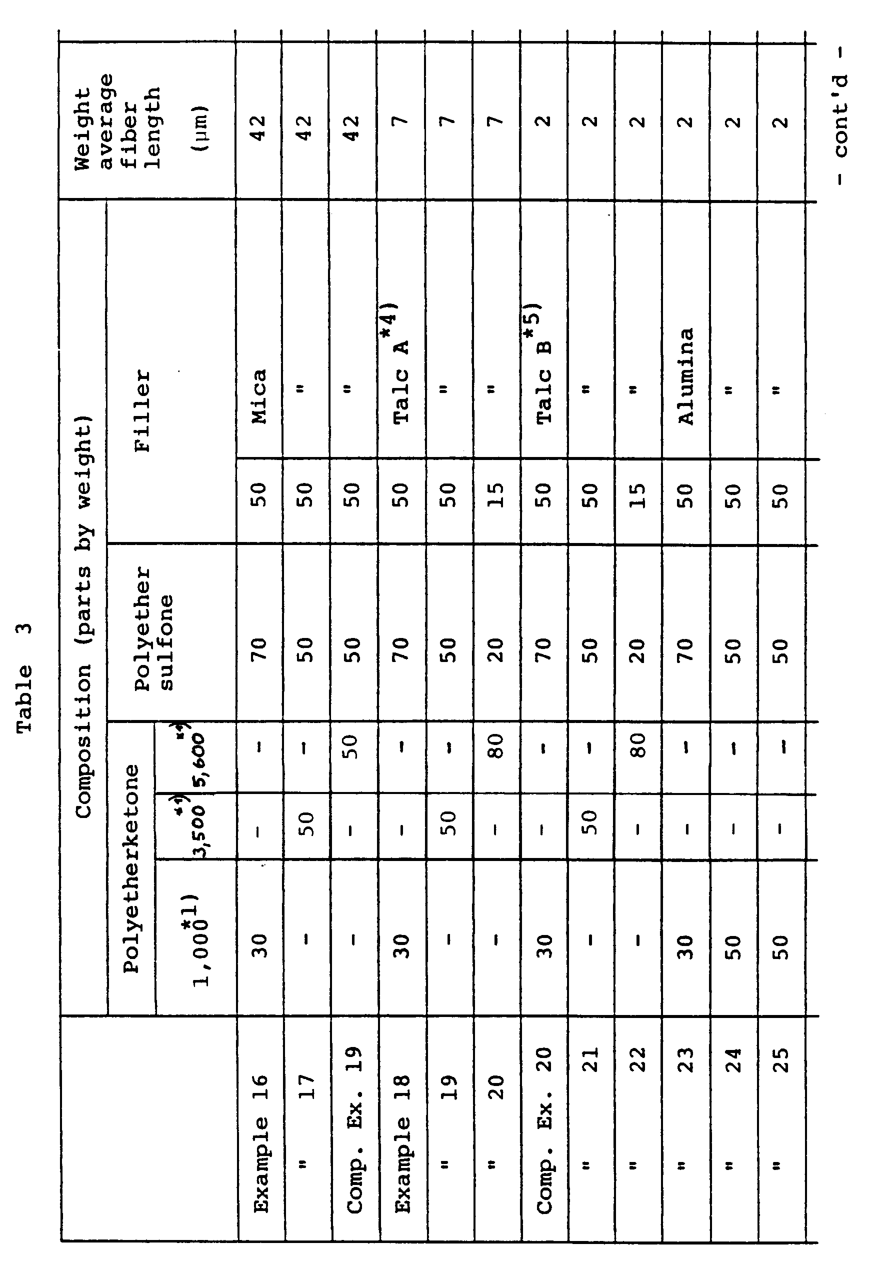

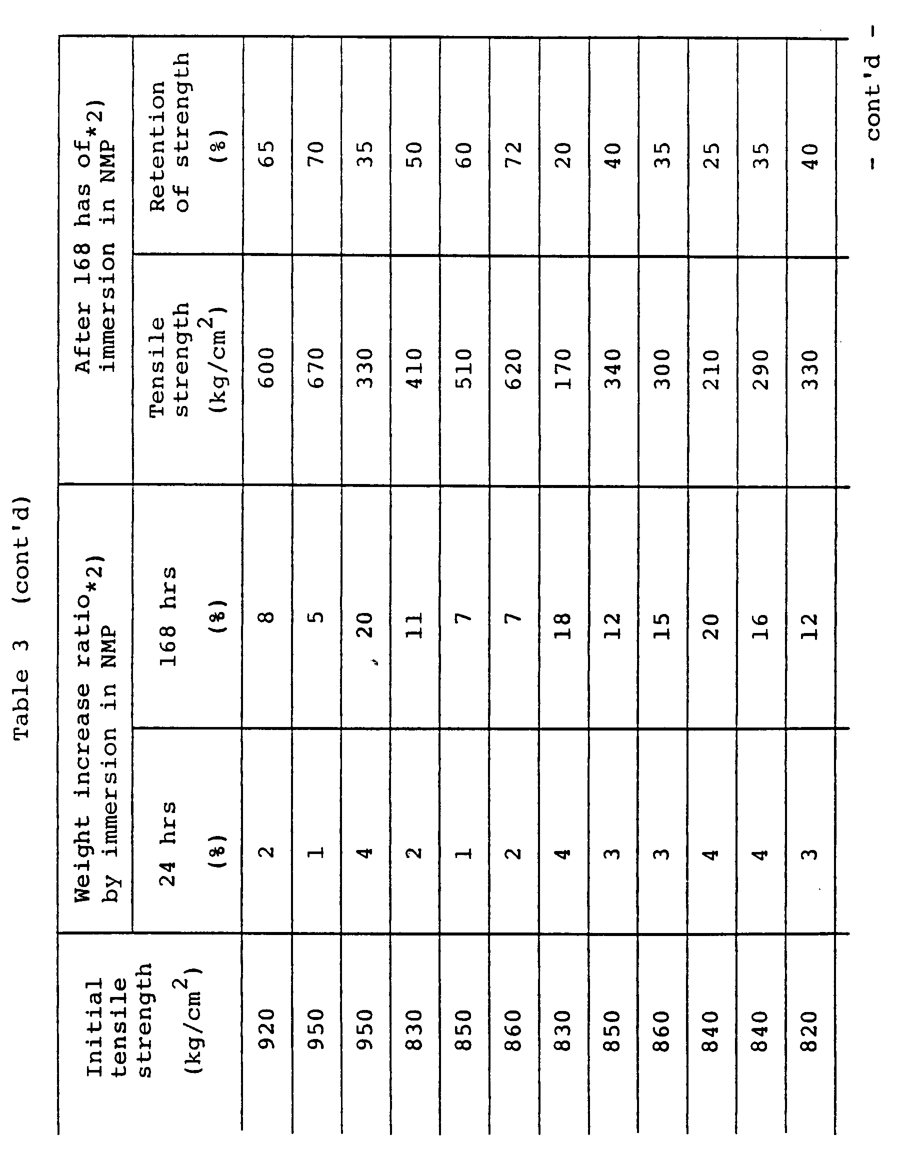

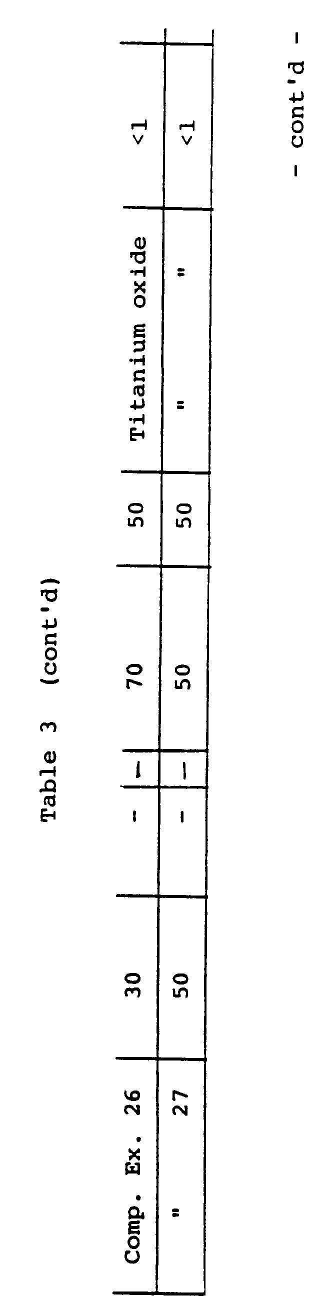

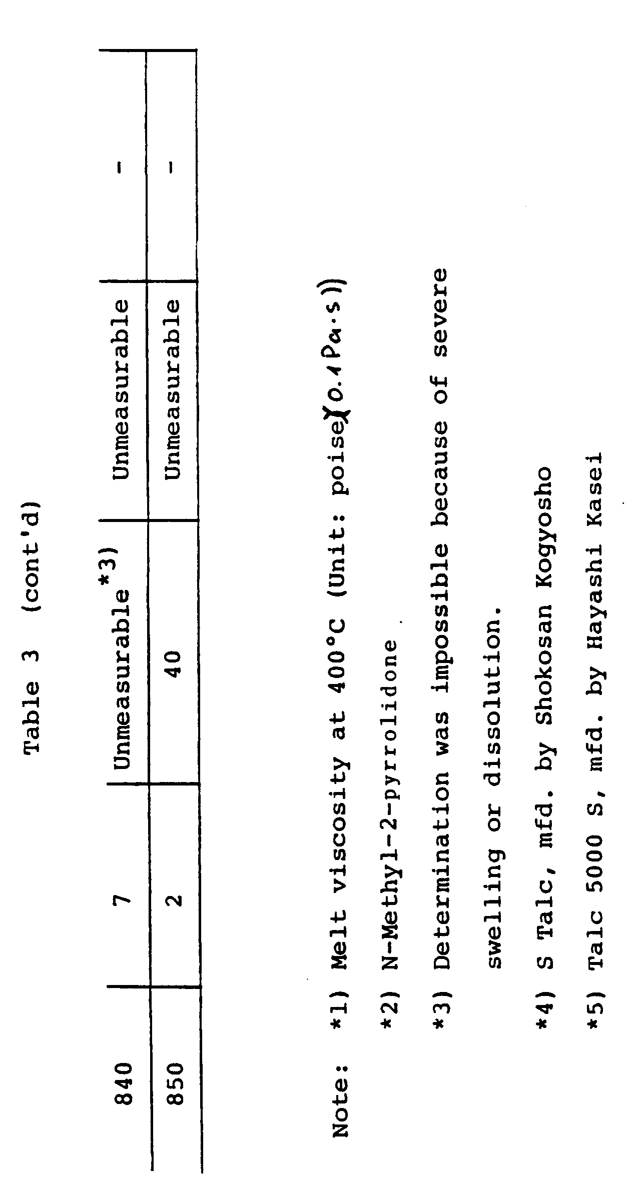

## Claims

1. A resin composition comprising:
(1) 100 parts by weight of a blend of:
20 to 95% by weight of a polyetherketone consisting of the repeating unit (A), 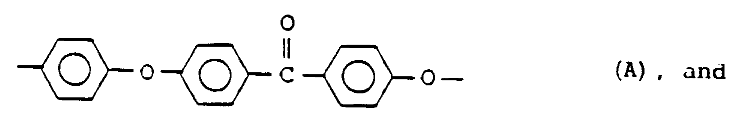 80 to 5% by weight of an aromatic polysulfone consisting of the repeating unit (B), 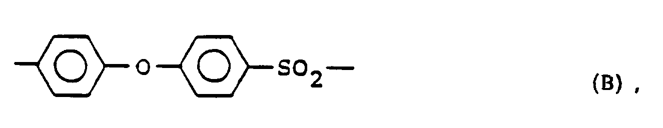 the melt viscosity of said polyetherketone at 400°C satisfying the following inequality,
$\text{500 ≦ y ≦ 70 x,}$
wherein x is the percentage by weight of said polyetherketone relative to the total amount of said polyetherketone and aromatic polysulfone, and the unit for y is poise (0.1 Pa·s), and
(2) 10 to 200 parts by weight of one or more fillers having an average fiber length or an average diameter of 5 µm or more.

2. A resin composition according to claim 1, wherein (1) is a blend of 30 to 90% by weight of the polyetherketone, and 70 to 10% by weight of the polysulfone.

3. A resin composition according to claim 1, wherein the filler is at least one member selected from inorganic fibers, organic fibers, inorganic needle-shaped materials, and tabular, lump, and globular fillers.

4. A resin composition according to claim 1, wherein the average fiber length or the average diameter of the filler is 10 µm or more.

5. A resin composition according to claim 1, wherein (1) is a blend of 40 to 90% by weight of the polyetherketone, and 60 to 10% by weight of the polysulfone.

6. A resin composition according to claim 1, wherein 15 to 200 parts by weight of one or more filler are compounded relative to 100 parts by weight of the resin composition of (1).

## Patentansprüche

1. Harzzusammensetzung, umfassend
(1) 100 Gew.-Teile eines Gemisches aus 20 bis 95 Gew.-% eines Polyetherketons, das aus der wiederkehrenden Einheit (A) 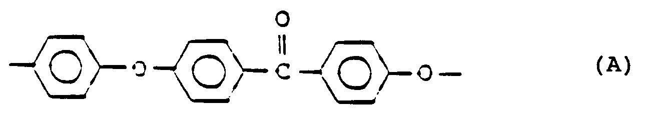 besteht, und 80 bis 5 Gew.-% eines aromatischen Polysulfons, das aus der wiederkehrenden Einheit (B) 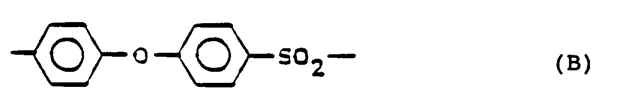 besteht, wobei die Schmelzviskosität des Polyetherketons bei 400°C der folgenden Ungleichung
$\text{500 ≦ y ≦ 70 x}$
genügt, in der x die Gewichtsprozent Polyetherketon, bezogen auf die Gesamtmenge des Polyetherketons und des aromatischen Polysulfons bedeutet, und die Einheit für y Poise (0,1 Pa·s) ist, und
(2) 10 bis 200 Gew.-Teile eines oder mehrerer Füllstoffe mit einer durchschnittlichen Faserlänge oder einem durchschnittlichen Durchmesser von mindestens 5 µm.

2. Harzzusammensetzung nach Anspruch 1, wobei (1) ein Gemisch von 30 bis 90 Gew.-% des Polyetherketons und 70 bis 10 Gew.-% des Polysulfons ist.

3. Harzzusammensetzung nach Anspruch 1, wobei der Füllstoff wenigstens einer aus der Gruppe anorganische Fasern, organische Fasern, anorganische nadelförmige Stoffe und tafelförmigen, klumpigen und kugelförmigen Füllstoffen ist.

4. Harzzusammensetzung nach Anspruch 1, wobei die durchschnittliche Faserlänge oder der durchschnittliche Durchmesser des Füllstoffes mindestens 10 µm beträgt.

5. Harzzusammensetzung nach Anspruch 1, wobei (1) ein Gemisch von 40 bis 90 Gew.-% des Polyetherketons und 60 bis 10 Gew.-% des Polysulfons ist.

6. Harzzusammensetzung nach Anspruch 1, wobei 15 bis 200 Gew.-Teile eines oder mehrerer Füllstoffe bezogen auf 100 Gew.-Teile der Harzzusammensetzung (1) eingesetzt werden.

## Revendications

1. Composition de résine comprenant
(1) 100 parties en poids d'un mélange de :
20 à 95% en poids d'une polyéthercétone consistant en les motifs (A) 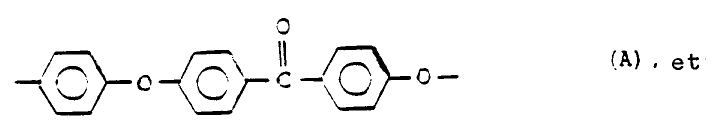 80 à 5% en poids d'une polysulfone aromatique consistant en les motifs (B) 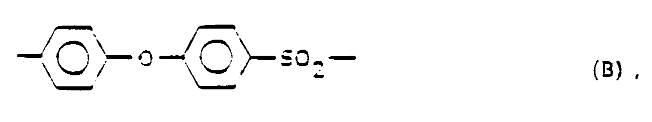 la viscosité à l'état fondu de ladite polyéthercétone à 400°C satisfaisant l'inégalité suivante
$\text{500 ≦ y ≦ 70 x,}$
où x est le pourcentage en poids de ladite polyéthercétone par rapport à la quantité totale desdites polyéthercétone et polysulfone aromatiques et l'unité de y est la poise (0,1 Pa.s), et
(2) 10 à 200 parties en poids d'une ou plusieurs charges ayant une longueur de fibre moyenne ou un diametre moyen de 5 µm ou plus.

2. Composition de résine selon la revendication 1, dans laquelle (1) est un mélange de 30 à 90% en poids de la polyéthercétone et de 70 à 10% en poids de la polysulfone.

3. Composition de résine selon la revendication 1, dans laquelle la charge est au moins un élément choisi parmi les fibres inorganiques, les fibres organiques, les matières en forme d'aiguilles inorganiques, et les charges plates, en blocs ou globulaires.

4. Composition de résine selon la revendication 1, dans laquelle la longueur de fibre moyenne ou le diamètre moyen de la charge est 10 µm ou plus.

5. Composition de résine selon la revendication 1, dans laquelle (1) est un mélange de 40 à 90% en poids de la polyéthercétone et de 60 à 10% en poids de la polysulfone.

6. Composition de résine selon la revendication 1, dans laquelle 15 à 200 parties en poids d'une ou plusieurs charges sont utilisées en mélange avec 100 parties en poids du mélange de (1).
